# EUROPÄISCHE PATENTSCHRIFT

(11) **EP 2 137 893 B1**
(45) Veröffentlichungstag und Bekanntmachung des Hinweises auf die Patenterteilung: **26.06.2013**
(21) Anmeldenummer: 08736287.7
(22) Anmeldetag: 16.04.2008
(51) Int. Cl.: H04L 12/46

(54) **PAKETVERMITTLUNGSVORRICHTUNG UND LOKALES KOMMUNIKATIONSNETZ MIT EINER SOLCHEN PAKETVERMITTLUNGSVORRICHTUNG**
PACKET SWITCHING DEVICE AND LOCAL COMMUNICATION NETWORK WITH SUCH A PACKET SWITCHING DEVICE
DISPOSITIF DE COMMUTATION DE PAQUETS ET RÉSEAU DE COMMUNICATION LOCAL COMPRENANT UN TEL DISPOSITIF DE COMMUTATION DE PAQUETS

(30) Priorität: 16.04.2007 DE 102007017835
(43) Veröffentlichungstag der Anmeldung: 30.12.2009
(73) Patentinhaber: Beckhoff Automation GmbH, 33415 Verl (DE)
(72) Erfinder: JANSSEN, Dirk, 33415 Verl (DE); BUETTNER, Holger, 12157 Berlin (DE); BECKHOFF, Hans, 33415 Verl (DE)
(74) Vertreter: Patentanwaltskanzlei WILHELM & BECK
(86) Internationale Anmeldenummer: PCT/EP2008/054613
(87) Internationale Veröffentlichungsnummer: WO 2008/125687

(56) Entgegenhaltungen:
- WO-A-99/09713
- DE-A1- 10 058 524
- DE-A1- 10 123 821
- DE-A1- 10 304 637

## Beschreibung

Die Erfindung betrifft eine Paketvermittlungsvorrichtung und ein lokales Kommunikationsnetz mit einer solchen Paketvermittlungsvorrichtung.

Lokale Kommunikationsnetzwerke, sogenannte "local area networks" (LANs), sind auf ein geografisches Gebiet begrenzt und setzen sich aus einem oder mehreren Servern und Arbeitsstationen, sogenannten Knoten, zusammen, die über ein Kommunikationsleitungsnetz, z.B. ein Koaxial-, Glasfaser- oder Twisted-Pair-Kabel miteinander verbunden sind. Bei LANs sind verschiedene Netzwerktopologien, z. B. Bus-, Stern- oder Baumstrukturen möglich. LANs werden mit einem Netzwerk-Betriebssystem und einem Netzwerk-Protokoll betrieben.

Der zurzeit am weitesten verbreitete Standard für ein LAN-Netzwerk-Protokoll ist das Ethernet. Mit dem Ethernet lassen sich Daten aktuell mit einer Geschwindigkeit von bis zu 100 Mbits/sec (Mbps) übertragen. Im OSI-Schichtenmodell, dem internationalen Referenzmodell für Datenübertragung in Netzwerken, das aus einem Schichtenstapel aus sieben Schichten aufgebaut ist, wobei für jede Schicht eine Menge von Protokollen definiert ist, die der jeweils nächst höheren Schicht ihre Dienste zur Verfügung stellen, ist das Ethernet der zweiten Schicht, der sogenannten Leitungsschicht, zugeordnet. In dieser Leitungsschicht werden die zu übermittelnden Daten zu Paketen gebündelt, denen spezifische Informationen für das jeweilige Kommunikationsprotokoll hinzugefügt werden. Die Leitungsschicht ist im Netzwerk für den Transport der Datenpakete von Knoten zu Knoten und für die Fehlererkennung zuständig. Das Ethernet unterstützt dabei unterschiedlichste Kommunikationsprotokolle, z.B. das TCP/IP-Protokoll oder das IPX-Protokoll.

Beim Ethernet-Konzept ist die Leitungsschicht in zwei Ebenen unterteilt, wobei die erste Ebene den Daten einen Kopfabschnitt, einen sogenannten Header, hinzufügt, der Informationen enthält, die für eine korrekte Datenübertragung vom Empfänger-Protokoll benötigt werden. In der zweiten Ebene des Ethernet-Protokolls werden dann die Datenpakete mithilfe eines zusätzlichen Headers und eines weiteren Endabschnitts, eines sogenannten Trailers, für den Transport der Datenpakete von Knoten zu Knoten eingekapselt. Mit solchen Ethernet-Datenpaketen, sogenannten Ethernet-Telegrammen, lassen sich Daten mit eine Länge von bis zu 1500 Bytes übertragen.

Das Ethernet legt weiterhin das Zugriffsverfahren fest, wie die einzelnen Knoten die physikalischen Verbindungswege des Netzwerkes nutzen und belegen dürfen. Das Ethernet arbeitet dabei nach dem sogenannten CSMA/CD (carrier sense multiple access/collision detect)-Zugriffsverfahren. Bei diesem Zugriffsverfahren wird vom sendewilligen Knoten vor dem Senden geprüft, ob der Übertragungsweg frei ist. Dann werden die Daten versandt. Da alle Knoten ihre Daten gleichzeitig verschicken können, kann es zu Kollisionen kommen. Von dem Knoten, der die Kollision bemerkt, wird dann der Sendevorgang unterbrochen. Um zu verhindern, dass zwei Knoten um eine geringe Zeitspanne versetzt mit dem Senden beginnen, erzeugen alle sendenden Knoten ein sogenanntes JAM-Signal, damit alle am Übertragungsweg befindlichen Knoten die Bearbeitung des aktuellen Datenpaketes abbrechen und so den Sendevorgang nicht stören.

Das Ethernet-Protokoll wird vornehmlich bei Bürokommunikations-Netzwerken eingesetzt. Aufgrund der Vorteile des Ethernet-Konzepts bei der Nutzung von Standard-Hardware- und Softwarekomponenten, sowie der Möglichkeit, auch bei einfacher Vernetzungstechnologie hohe Datenübertragungsraten zu erreichen, besteht der Wunsch, die Ethernet-Netzwerkkommunikation auch in der industriellen Fertigung zum Datenaustausch und zum Durchführen von Steuerungsaufgaben einsetzen zu können. Insbesondere die mangelhafte Echtzeit-Fähigkeit des Ethernet-Protokolls lässt bisher jedoch nur einen begrenzten Einsatz in der Automatisierungstechnik zu. Bei der Steuerung von Maschinen ist es nämlich erforderlich, dass eine zyklische Bearbeitung der Steuerungsaufgabe ohne zeitliche Schwankungen, d.h. mit nur geringen Abweichungen von der gewünschten Zykluszeit im Bereich weniger Mikrosekunden folgt, wobei mit einer vorhersehbaren Antwortzeit auf die Regelanforderung reagiert wird. Das vom Ethernet verwendete CSMA/CD-Zugriffsverfahren garantiert solche festen Reaktionszeiten aber nicht. Bei sehr starker Netzwerkauslastung kann es aufgrund des verwendeten Zugriffsverfahrens nämlich passieren, dass Ethernet-Telegramme über einen gewissen Zeitraum nicht versandt werden können, so dass eine garantierte Antwortzeit auf eine Regelanforderung nicht gewährleistet ist.

Um in Ethernet-Netzwerken trotzdem eine gewisse Echtzeit erreichen zu können, werden solche Ethernet-Netzwerke oft in Sterntopologie unter Verwendung einer Paketvermittlungsvorrichtung, eines sogenannten Switches, aufgebaut. Dabei weist jeder Knoten, im Weiteren auch als Teilnehmer bezeichnet, eine Punkt-zu-Punkt-Verbindung zu dem Switch des Netzwerkes auf. Eine solche Netzwerktopologie aus lauter Punkt-zu-Punkt-Verbindungen zwischen den Teilnehmern und dem zentralen Switch erfordert aber eine aufwändige Verkabelung und ist deshalb mit hohen Kosten verbunden.

Das Switch untersucht jedes auf dem Netzwerk durchlaufende Ethernet-Telegramm auf die Adresse des angesprochenen Teilnehmers und leitet dann das Ethernet-Telegramm an den adressierten Teilnehmer über die entsprechende Punkt-zu-Punkt-Verbindung weiter. Switches arbeiten dabei in der Regel so, dass sie mit der Zeit anhand der Adressen lernen, welche Teilnehmer sich an welcher Schnittstelle des Switches befindet. Anhand einer solchermaßen erzeugten dynamischen Adressentabelle im Switch wird beim Empfang eines Ethernet-Telegramms dann entschieden, an welche Schnittstelle das Ethernet-Telegramm geschickt werden soll. Falls es aber im Switch für die Zieladresse des empfangenen Ethernet-Telegramms keinen Adresseintrag gibt oder das empfangene Ethernet-Telegramm ein Multicast- bzw. Broadcasttelegramm ist, wird das empfangene Ethernet-Telegramm über alle Schnittstellen versandt.

Bezüglich der Sendereihenfolge gilt bei den Switches in der Regel das FIFO-Prinzip, bei denen diejenigen Ethernet-Telegramme, die zuerst empfangen wurden, auch zuerst wieder gesendet werden. Dies verhindert aber eine zuverlässige Echtzeitbearbeitung der Ethernet-Telegramme. Neuere Switches unterstützen deshalb auch das sogenannte VLAN-Tagging, mit dem einzelne Ethernet-Telegramm beim Senden priorisiert werden können, um so eine Echtzeitfähigkeit zu gewährleisten. Ferner sind auch Switches bekannt, die aufgrund von protokollspezifischen Kennungen Ethernet-Telegramme zu fest vorgegebenen Zeitpunkten versenden, um so eine Echtzeitbearbeitung zu ermöglichen. Durch das Erfordernis von protokollspezifischen Kennungen können solche Switches aber nur gemäß dem jeweiligen Protokoll erzeugte Ethernet-Telegramme verarbeiten. Ethernet-Telegramme, die mit anderen Ethernet-Protokollen erzeugt wurden, können dagegen nicht zeitgesteuert geschaltet werden, um eine Echtzeitbearbeitung zu gewährleisten.

Bei den bekannten Switches ist aber grundsätzlich eine Reihe von Szenarien denkbar, bei denen ein Echtzeitverhalten, bei dem ein Ethernet-Telegramm innerhalb einer vorbestimmten Zeit zuverlässig übertragen werden muss, nicht garantiert werden kann. Die bekannten Switches führen immer einen Adressenvergleich zur Weiterleitung von Ethernet-Telegrammen durch. Wenn es im Switch für die Zieladresse des empfangenen Ethernet-Telegramms keinen Adresseintrag gibt oder das empfangene Ethernet-Telegramm ein Multicast- bzw. Broadcasttelegramm ist, wird das empfangene Ethernet-Telegramm über alle Schnittstellen versandt. Die Schnittstellen sind dann für die maximale Ethernetdatenlänge, bei einer Datenübertragungsrate von 100Mbits/sec also für 150 µsec blockiert, was eine Echtzeitverarbeitung mit kleinen Zykluszeiten, z.B. von 100 µsec unmöglich macht. Bei den zeitgesteuerten Switches muss in jeder Schnittstelle für Ethernet-Telegramme mit der vorgebenen protokollspezifischen Kennung die Zeitspanne der maximalen Ethernetdatenlänge bei einer Datenübertragungsrate von 100Mbits/sec also für 150 µsec reserviert werden. Echtzeitanwendungen mit kleineren Zykluszeiten unter Verwendung beliebiger Ethernet-Protokolle sind also auch hier nicht ausführbar.

Um ohne Verwendung von Switches auf einfache und kostengünstige Weise Echtzeit-Steuerungsaufgaben mithilfe von Ethernet-Telegrammen ausführen zu können, wird in der DE 103 04 637 vorgeschlagen, die für die Echtzeitanwendung vorgesehenen Teilnehmer an einen ringförmigen Übertragungsweg anzuschließen, wobei dieser ringförmige Übertragungsweg über einen Netzwerk-Koppler mit einem Netzwerk, auf dem Ethernet-Telegramme übertragen werden können, verbunden ist. Der Netzwerk-Koppler ist dabei so ausgelegt, dass ein über eine externe Schnittstelle des Netzwerk-Kopplers vom Netzwerk empfangenes Ethernet-Telegramm an eine interne Schnittstelle des Netzwerk-Kopplers weitergeleitet und auf dem ringförmigen Übertragungsweg ausgegeben wird, wobei jeder an den ringförmigen Übertragungsweg angeschlossene Teilnehmer beim Durchlauf des Ethernet-Telegramms auf dem ringförmigen Übertragungsweg die für den jeweiligen Teilnehmer bestimmten Nutzdaten mit dem auf dem Übertragungsweg umlaufenden Ethernet-Telegramm austauscht.

Bei dieser Netzwerk-Auslegung erscheint der ringförmige Übertragungsweg mit dem Netzwerk-Koppler und den über den Netzwerk-Koppler an den Übertragungsweg angeschlossenen Teilnehmern gegenüber dem Netzwerk als ein einzelner Ethernet-Teilnehmer. Der Netzwerk-Koppler und die an den ringförmigen Übertragungsweg angeschlossenen Teilnehmer teilen sich eine einzelne Ethernet-Anschaltung. Durch die Verarbeitung der Ethernet-Telegramme auf dem ringförmigen Übertragungsweg im Durchlauf durch die daran angeschlossenen Teilnehmer verringert sich die Reaktionszeit der einzelnen Teilnehmer wesentlich, so dass mit den umlaufenden Ethernet-Telegrammen Steuerungsaufgaben in Echtzeit ausgeführt werden können. Insbesondere ist es auch möglich, mit Standard-Ethernet-Telegrammen, die üblicherweise eine Datenlänge von mehreren 100 Bytes aufweisen, auch Teilnehmer einfach und kostengünstig anzusteuern, die nur wenige Bytes an Prozessdaten benötigen.

Eine Schwierigkeit bei der ringförmigen Netzwerkauslegung besteht jedoch dann, wenn sehr viele Teilnehmer angeschlossen werden, da dann Verzögerungen bei der Datenverarbeitung auftreten können, die eine Echtzeitverarbeitung bei sehr kurzen Zykluszeiten verhindern. Beim Durchlauf durch die einzelnen Teilnehmer sowie bei der Weiterleitung zwischen den Teilnehmern treten nämlich Zeitverzögerungen in der Größenordnung von mehreren hundert Nanosekunden auf, die bei einem ringförmigen Zusammenschluss von mehr als 100 Teilnehmern Zykluszeiten bei der Echtzeitverarbeitung von 50 µsec schwierig machen. Um einen überlangen Strang zu vermeiden, wird in der DE 103 04 637 vorgeschlagen, mehrere kurze Stränge über einen herkömmlichen Adressen vergleichenden Switch mit einem Steuerungsrechner zu verbinden, wobei in jedem Strang zusätzlich ein Filter vorgesehen ist, mit dem es ermöglicht wird, Ethernet-Telegramme herauszufiltern, die nicht für über den Strang angeschlossene Teilnehmer bestimmt sind.

Aus der WO 99/09713 A ist ein ringförmiges Kommunikationsnetz mit mehreren Paketvermittlungsvorrichtungen bekannt, wobei über die Paketvermittlungsvorrichtungen lokale Netzwerke an das Ringnetz angeschlossen sind. Die Paketvermittlungsvorrichtungen weisen jeweils eine Adressentabelle mit den Teilnehmern im Netz auf und vermitteln die Datenpakete auf der Grundlage eines Adressenabgleichs.

Aus der DE 10123821 A1 ist ein Ethernet-Netzwerk mit einer zwischengeschalteten Paketvermittlungsvorrichtung bekannt, bei der die Teilnehmer in logische Gruppen zusammengefasst sind und die Paketvermittlungsvorrichtung entsprechend den der Gruppe zugeordneten Vorgaben die Paketvermittlung durchführt.

Aus der DE 100 58 524 A1 ist ein Ethernet-Netzwerk zur Datenübertragung von Echtzeit-Datenpaketen und Nicht-Echtzeit-Datenpaketen bekannt, bei denen die einzelnen Netzwerkteilnehmer Kopplungsvorrichtungen aufweisen, die eine zeitbasierte Datenpaketdurchleitung auf die angeschlossenen Schnittstellen durchführen.

Aufgabe der Erfindung ist es, eine Paketvermittlungsvorrichtung und ein Kommunikationsnetzwerk bereitzustellen, mit dem sich auf einfache und kostengünstige Weise Echtzeitsteuerungsaufgaben mit sehr kurzen Zykluszeiten ausführen lassen.

Diese Aufgabe wird durch eine Paketvermittlungseinrichtung gemäß Anspruch 1 und ein Kommunikationsnetzwerk gemäß Anspruch 8 gelöst. Bevorzugte Weiterbildungen sind in den abhängigen Ansprüchen angegeben.

Erfindungsgemäß weist die Paketvermittlungsvorrichtung für ein Kommunikationsnetzwerk eine Netzwerk-Schnittstelle zum Senden und Empfangen von Datenpaketen, mehrere Strang-Schnittstellen zum Senden und Empfangen von Datenpaketen an mehrere in Reihe an einen ringförmigen Übertragungsweg angeschlossene Teilnehmer und eine mit der Netzwerk-Schnittstelle und den mehreren Strang-Schnittstellen verbundene Vermittlungseinrichtung auf. Die Vermittlungseinrichtung weist eine Steuerungseinheit auf, die den Datendurchsatz steuert, wobei die Steuerungseinheit eine Schnittstellen-Zuordnungstabelle umfasst, in der festgelegt ist, dass die über die Netzwerk-Schnittstelle empfangenen Datenpakete über die Strang-Schnittstellen und die über die Strang-Schnittstellen empfangenen Datenpakete über die Netzwerk-Schnittstelle ausgegeben werden.

Diese Auslegung ermöglicht es, einfache und kostengünstige ringförmige Teilnehmer-Netzwerke zu verwenden und gleichzeitig auch bei einer Vielzahl von Teilnehmern Echtzeitaufgaben mit kurzen Zykluszeiten auszuführen. Die Zwischenschaltung der Paketvermittlungseinrichtung sorgt dafür, dass keine überlangen Stränge und damit Umlaufzeiten entstehen. Gleichzeitig wird jede Verzögerung und Blockierung der Schnittstellen in der Paketübermittlungsvorrichtung durch die feste Schnittstellen-Zuordnung bei der Datenübertragung, bei der vom Steuerungsrechner auf der Netzwerk-Schnittstelle empfangene Datenpakete zwingend an die Strang-Schnittstellen und damit die nachgeordneten Stränge weitergeleitet werden und auf den Strang-Schnittstellen empfangene Datenpakete auf die Netzwerk-Schnittstelle und damit den Steuerungsrechner rückgekoppelt werden, verhindert. Da die Durchlaufzeiten für die Ethernet-Telegramme in der Paketübermittlungsvorrichtung maximal verkürzt sind, wird die Echtzeitfähigkeit des Ethernet-Netzwerkes gewährleistet. Die Datenpakete werden adressen - und protokollunabhängig automatisch weitergeleitet, wodurch keine Zeitverzögerung und Blockierungen auftreten.

Gemäß einer bevorzugten Ausführungsform sorgt die Paketvermittlungseinrichtung dafür, dass von den Strang-Schnittstellen empfangene Datenpakete in einer vorgegebenen Prioritätsreihenfolge weitergeleitet werden. Durch die Priorisierung von bestimmten Strang-Schnittstellen wird gewährleistet, dass Stränge mit Teilnehmern, die besonders zeitkritische Echtzeitaufgaben ausführen, in der Datenübertragung bevorzugt werden. Dabei besteht die Möglichkeit, mehreren Strang-Schnittstellen auch gleiche Prioritäten zuzuweisen, wobei dann die Priorisierung der Telegramme anhand einer Adresseninformation der empfangenen Datenpakete ausgeführt werden kann.

Gemäß einer weiteren bevorzugten Ausführungsform der Erfindung kann die Vermittlungseinrichtung der Paketvermittlungsvorrichtung einen zeitgesteuerten Sendevorgang, insbesondere einen synchronen Sendevorgang der über die Strang-Schnittstellen zu versendenden Datenpakete durchführen. Hierdurch wird eine genaue Steuerung der Echtzeitverarbeitung durch die in den Strängen zusammengeschlossenen Teilnehmer ermöglicht. Gleichzeitig kann durch den zeitgesteuerten parallelen Sendevorgang der Strang-Schnittstellen die Netzwerk-Schnittstelle mit einer höheren Datenübertragungsrate betrieben werden.

Die Erfindung wird anhand der beigefügten Zeichnungen näher erläutert. Es zeigen:
- Figuren 1A und 1B: einen Netzwerk-Koppler mit ringförmig an den Netzwerk-Koppler angeschlossenen Teilnehmern, die eine Verarbeitung eines Ethernet-Telegramms im Durchlauf ausführen, wobei Figur 1A eine Ausführung mit Ringleitung und Figur 1B eine Ausführung mit Zweikanal-Leitung wiedergibt;
- Figur 2: ein erfindungsgemäßes Netzwerk mit einem Switch; und
- Figur 3: ein schematische Darstellung eines erfindungsgemäßen Switches.

Mit lokalen Kommunikationsnetzen (LANs) lassen sich auf einfache Weise Daten und Ressourcen zwischen Arbeitsstationen, im Allgemeinen Computer oder Maschinen, im Weiteren auch Knoten oder Teilnehmer genannt, austauschen und gemeinsam nutzen. Das Ethernet-Konzept ist dabei der am weitesten verbreiterte Kommunikationsstandard im LAN.

Bei Ethernet-Netzwerken ist die Mehrzahl von Knoten über ein gemeinsames Übertragungsmedium miteinander verbunden, wobei eine Verkapselung der zu übermittelnden Daten in sogenannten Datenpaketen, im Weiteren auch als Ethernet-Telegramme bezeichnet, mit einem vorgegebenen Format vorgenommen wird.

Das Ethernet besteht aus drei Bereichen, nämlich dem Übertragungsmedium und den Netzwerk-Schnittstellen, d. h. der Hardware, der Menge von Protokollen, die den Zugriff auf das Übertragungsmedium steuern, und der Ethernet-Paketform. Das Ethernet stellt dabei grundsätzlich ein Busnetz dar, wobei beliebige Netzwerktopologien, z.B. Stern-, Bus- oder Baumnetze verwendet werden können. Die Ethernet-Datenübertragung findet dabei üblicherweise mithilfe des CSMA/CD-Zugriffsverfahrens statt, bei dem eine Datenübertragung nur durchgeführt wird, wenn das Netz ruhig ist. Darüber hinaus ist ein Kollisionsverhinderungsmechanismus vorgesehen. Das Ethernet-Datenpaket selbst kann dabei eine Datenlänge von bis zu 1500 Bytes aufweisen, wobei die Daten mittels Header und Trailer, die eine Anfangskennung, die Ziel- und Quelladresse, den Datenpakettyp und den Fehlererkennungsmechanismus angeben, verkapselt sind.

Das Ethernet hat sich als Kommunikationsstandard für Netzwerksysteme vor allem in der Bürokommunikation durchgesetzt, da Standard-Hardware-Komponenten und -Software-Protokolle genutzt werden können und darüber hinaus hohe Datenübertragungsraten möglich sind. Aus diesem Grund ist es auch wünschenswert, den Ethernet-Standard in industrieller Umgebung bei der Datenübertragung, insbesondere für Steuerungsaufgaben, nutzen zu können. Das wesentliche Problem besteht hierbei in der mangelnden Echtzeitfähigkeit des Ethernet-Standards, so dass Automatisierungsaufgaben mit Echtzeitanwendungen in der Regel von Ethernet-Kommunikationsnetzen getrennt in eigenständigen Steuerungsbaugruppen, sogenannten Feldbussystemen, durchgeführt werden.

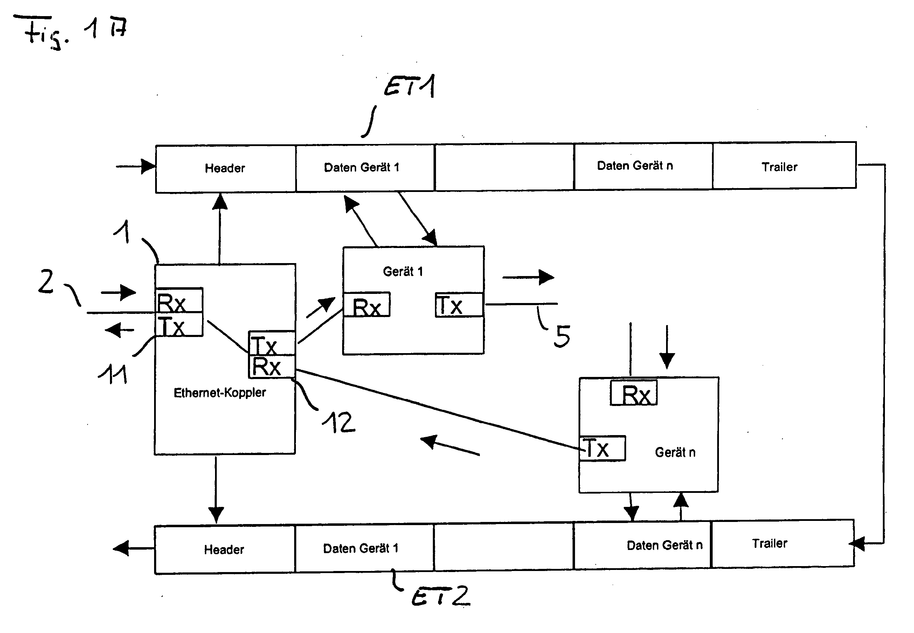

Um den Ethernet-Standard und ein entsprechend ausgelegtes Netzwerk auf einfache und kostengünstige Weise auch zur Ausführung von Automatisierungsaufgaben, insbesondere von solchen, bei denen die einzelnen, an der Steuerung beteiligten Teilnehmer Prozessdaten von nur wenigen Bytes benötigen, verwenden zu können, ist, wie in Figur 1A gezeigt, ein Netzwerk-Koppler 1, im Weiteren auch als Ethernet-Koppler bezeichnet, vorgesehen, der eine externe Schnittstelle 11 zur Anbindung an ein Ethernet-Netzwerk aufweist. In der in Figur 1A gezeigten Ausführungsform ist der Ethernet-Koppler 1 mit seiner externen Schnittstelle 11 dabei an das Ethernet-Netzwerk über ein Übertragungsmedium 2, das ein Koaxialkabel, ein Twisted-Pair-Kabel oder ein Glasfaserkabel sein kann, angeschlossen.

Die externe Schnittstelle 11 des Netzwerk-Kopplers 1 ist mit einer Empfangseinheit RX zum Empfang eines Ethernet-Telegramms vom Netzwerk und einer Sendeeinheit TX zum Senden eines Ethernet-Telegramms auf dem Netzwerk ausgestattet. Figur 1A zeigt solch ein vom Ethernet-Koppler 1 empfangenes Ethernet-Telegramm ET1 und ein vom Ethernet-Koppler 1 gesendetes Ethernet-Telegramm ET2. Jedes der beiden Ethernet-Telegramme ET1, ET2 setzt sich aus einem Header mit der Empfangskennung und der Ziel- und Quelladresse, einem Datenbereich sowie einem Trailer, der eine Paketlänge und einen Fehlererkennungsmechanismus angibt, zusammen. Der zwischen dem Header und dem Trailer vorgesehene Datenbereich enthält die für die Steuerungsaufgabe notwendigen Prozessdaten, die vorzugsweise ein gesamtes Prozessabbild wiedergeben. Diese Prozessdaten sind wiederum vorzugsweise in für die einzelnen Teilnehmer der Steuerungsaufgabe erforderliche Datenblöcke, d. h. für Teilnehmer Gerät 1 "Daten Gerät 1" usw. gruppiert.

Der Ethernet-Koppler 1 ist weiter über eine interne Schnittstelle 12 an eine Reihe von Teilnehmern, die als Gerät 1 bis n gekennzeichnet sind, über einen ringförmigen Übertragungsweg 5 angeschlossen. Dieser ringförmige Übertragungsweg 5 schließt die Teilnehmer Gerät 1 bis n zu einer Ringtopologie zusammen, wobei als Dateneinkoppelstelle eine Sendeeinheit TX der internen Schnittstelle 12 des Ethernet-Kopplers 1 und als die Datenauskoppelstelle eine Empfangseinheit RX der internen Schnittstelle 12 des Ethernet-Kopplers 1 dient.

Die einzelnen Teilnehmer am Übertragungsweg 5 sind zu einer Kette zusammengeschlossen, wobei jeder Teilnehmer mit zwei Nachbarn, der erste und letzte Teilnehmer in der Kette dabei mit dem Ethernet-Koppler 1 verbunden sind. Die Datenübertragung erfolgt dabei in eine Richtung, ausgehend vom Ethernet-Koppler 1 zum Teilnehmer Gerät 1 und von dort bis zum Teilnehmer Gerät n und dann zurück in den Ethernet-Koppler 1. Die Übertragungsrichtung ist in Fig. 1A mit einem Pfeil angedeutet. Jeder Teilnehmer weist zum Empfang des umlaufenden Ethernet-Telegramms von dem vorherigen Teilnehmer eine Schnittstelle mit einer Empfangseinheit RX und zur Weitergabe an den nächstfolgenden Teilnehmer eine Schnittstelle mit einer Sendeeinheit TX auf.

Der Datenaustausch erfolgt dabei folgendermaßen: Das vom Ethernet-Netzwerk über das Übertragungsmedium 2 angelegte Ethernet-Telegramm ET1 mit den Prozessdaten für die einzelnen Teilnehmer der Automatisierungsaufgabe wird durch die Empfangseinheit RX der externen Schnittstelle 11, die das Netzwerk mit dem Ethernet-Koppler 1 verbindet, empfangen. Das empfangene Ethernet-Telegramm wird dann von der externen Schnittstelle 11 an die interne Schnittstelle 12 weitergegeben, wobei die Sendeeinheit TX der internen Schnittstelle 12 das Ethernet-Telegramm ohne nennenswerte Verzögerung sofort auf den ringförmigen Übertragungsweg 5 ausgibt.

Jeder am ringförmigen Übertragungsweg 5 angeschlossene Teilnehmer entnimmt dann die für ihn bestimmten Prozessdaten aus dem umlaufenden Ethernet-Telegramm (Pfeile in Fig. 1A), d. h. der Teilnehmergerät 1 die "Daten Gerät 1" usw. und fügt seinerseits die sich aus der Prozessdurchführung ergebenden Prozessdaten wiederum an die entsprechende Stelle im Ethernet-Telegramm ein. Das so umlaufende Ethernet-Telegramm wird dann nach Durchlauf durch das letzte Teilnehmergerät n an die Empfangseinheit RX der internen Schnittstelle 12 des Ethernet-Kopplers 1 gesendet und von dort an die externe Schnittstelle 11 weitergeleitet, die das Ethernet-Telegramm ET2 mit der Sendeeinheit TX in das Übertragungsmedium 2 des Ethernet-Netzwerkes einspeist. Der beschriebene Datenaufbau der umlaufenden Ethernet-Telegramme ist dabei nur beispielhaft.

Die Ankopplung der Teilnehmer einer Automatisierungsaufgabe an das Ethernet-Netzwerk über einen Ethernet-Koppler, wobei die Teilnehmer über eine Ringstruktur zusammengeschlossen sind, hat den Vorteil, dass die an den Ethernet-Koppler angeschlossenen Geräte vom Ethernet-Netzwerk als ein einzelner Standard-Ethernet-Teilnehmer angesehen werden. Durch die spezielle Ethernet-Anschaltung im Ethernet-Koppler wird das von diesem empfangene Ethernet-Telegramm ohne nennenswerte Verzögerung auf die Ringstruktur ausgegeben, so dass jeder Teilnehmer die an ihn gerichtete Daten im Ethernet-Telegramm während des Durchlaufs des Ethernet-Telegramms auf dem Übertragungsring entnehmen und seinerseits die entsprechenden Daten einfügen kann. Die Vorteile dieser Vorgehensweise sind, dass aufgrund der Verarbeitung des Ethernet-Telegramms im Durchlauf keine nennenswerten Verzögerungen bei der Datenverarbeitung entstehen und somit kurze Reaktionszeiten, wie sie für eine Echtzeitanwendung erforderlich sind, eingehalten werden können. Ein weiterer Vorteil ist, dass die Ethernet-Anschaltkosten pro Teilnehmer minimiert werden können, da alle angeschlossenen Teilnehmer mit dem Ethernet-Koppler die Ethernet-Anschaltung teilen und durch die Verarbeitung des Ethernet-Telegramms im Durchlauf keine leistungsfähigen Mikrocontroller in den Geräten selbst notwendig sind.

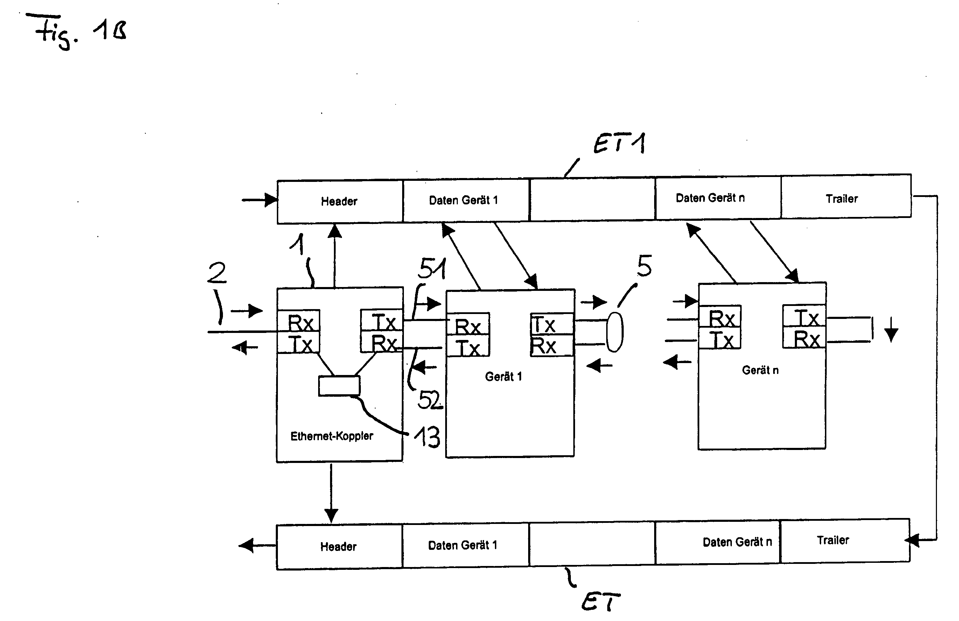

Der ringförmige Übertragungsweg kann eine einfache und damit billige Übertragungsphysik mit auch geringer Reichweite haben. So kann für den Übertragungsweg beispielsweise ein Flachbandkabel, über das LVDS-Signale übertragen werden können, oder ein Lichtleiterkabel statt der aufwändigen Twisted-Pair-Kabel oder Glasfaserkabel eingesetzt werden. Falls sich die Übertragungsphysik des Ethernet-Netzwerkes von dem des ringförmigen Übertragungsweges unterscheidet, ist im Ethernet-Koppler 1 eine Verarbeitungseinrichtung 13, wie sie in Figur 1B gezeigt ist, notwendig, um ein Ethernet-Telegramm von der Übertragungsphysik des Netzwerkes auf die des ringförmigen Übertragungsweges 3 umzusetzen. Diese Verarbeitungseinheit 13 ist zwischen der externen Schnittstelle 11 und internen Schnittstelle 12 des Ethernet-Kopplers 1 angeordnet. Weiterhin können von der Verarbeitungseinheit 13 ggfs. notwendigen Änderungen am Ethernet-Telegramm vorgenommen werden, um den Ethernet-Standard für das auf dem Übertragungswege 5 modifizierte Ethernet-Telegramms zu garantieren, z.B. durch Vertauschung von Quell- und Zieladresse und Neuberechnung einer Ethernet-Checksumme.

Figur 1B zeigt dabei eine weitere mögliche Ausführungsform des ringförmigen Übertragungsweges 3. Anstelle eines Einkanal-Übertragungsweges, wie in Figur 1A gezeigt, ist in Fig. 1B ein Zweikanal-Übertragungsweg vorgesehen. Die Übertragung findet dabei so statt, dass das vom Ethernet-Koppler 1 auf den Übertragungsweg 5 ausgegebene Ethernet-Telegramm mit den Prozessdaten auf einem ersten Kanal 51 vom Teilnehmer Gerät 1 bis zum Teilnehmer Gerät n weitergegeben wird, wobei jeder Teilnehmer beim Durchlauf den gewünschten Datenaustausch vornimmt. Der letzte angeschlossene Teilnehmer Gerät n koppelt dann das verarbeitete Ethernet-Telegramm auf einen zweiten Kanal 52 zurück, wobei jeder zwischen dem Teilnehmer Gerät n und dem Ethernet-Koppler 1 zwischengeschaltete weitere Teilnehmer das Ethernet-Telegramm nur durchleitet. Diese Ausgestaltung ermöglicht es, den üblicherweise verwendeten Voll-Duplex-Übertragungsweg des Ethernet-Netzwerkes auch für den ringförmigen Übertragungsweg zum Anschluss der Automatisierungsteilnehmer an den Ethernet-Koppler zu verwenden. Jeder Teilnehmer weist zur Weitergabe der Ethernet-Telegramme auf die Voll-Duplex-Leitung vorzugsweise zwei Schnittstellen auf, die jeweils komplementär eine Sendeeinheit TX und eine Empfangseinheit RX aufweisen, um auf dem ersten und dem zweiten Kanal senden bzw. empfangen zu können.

Bei der Netzwerkauslegung mit einem ringförmigen Übertragungsweg, bei dem der Ethernet-Koppler am Eingang als Ethernet-Anschaltung dient und die an den Ethernet-Koppler angeschlossenen Teilnehmer die Ethernet-Telegramme im Durchlauf verarbeiten, kann es jedoch bei einer zu hohen Anzahl von Teilnehmern zu ungewünschten Verzögerungen kommen, die die Echtzeitfähigkeit der Netzwerkauslegung beeinträchtigen. Jeder Teilnehmer benötigt nämlich eine gewisse Durchlaufzeit zur Verarbeitung der Telegramme, die insbesondere von der Leistungsfähigkeit der Verarbeitungseinheit im Teilnehmer abhängt und durchschnittlich ca. 200 nsec beträgt. Hinzu kommen noch Verzögerungszeiten bei der Übertragung der Ethernet-Telegramme von einem Teilnehmer auf den anderen, sodass bei einer Anzahl von 100 Teilnehmern am ringförmigen Übertragungsweg Zykluszeiten bei der Echtzeitbearbeitung von weniger als 50 µsec schwer zu gewährleisten sind.

Um den vorgeschlagenen, einfachen und kostengünstigen ringförmigen Übertragungsweg mit einem Ethernet-Koppler als Ethernet-Anschaltung auch bei einer hohen Anzahl von Teilnehmern einsetzen zu können und gleichzeitig auch kleine Zykluszeiten unter 100 µsec zuverlässig zu garantieren, wird erfindungsgemäß vorgeschlagen, den ringförmigen Übertragungsweg bei einer hohen Anzahl von Teilnehmern in mehrere Stränge zu unterteilen und zusätzlich eine Paketvermittlungsvorrichtung, die im Weiteren als "Switch" bezeichnet wird, vorzusehen, die die einzelnen Stränge mit einem Steuerungsrechner zur Durchführung der Echtzeitsteuerungsaufgaben verbindet.

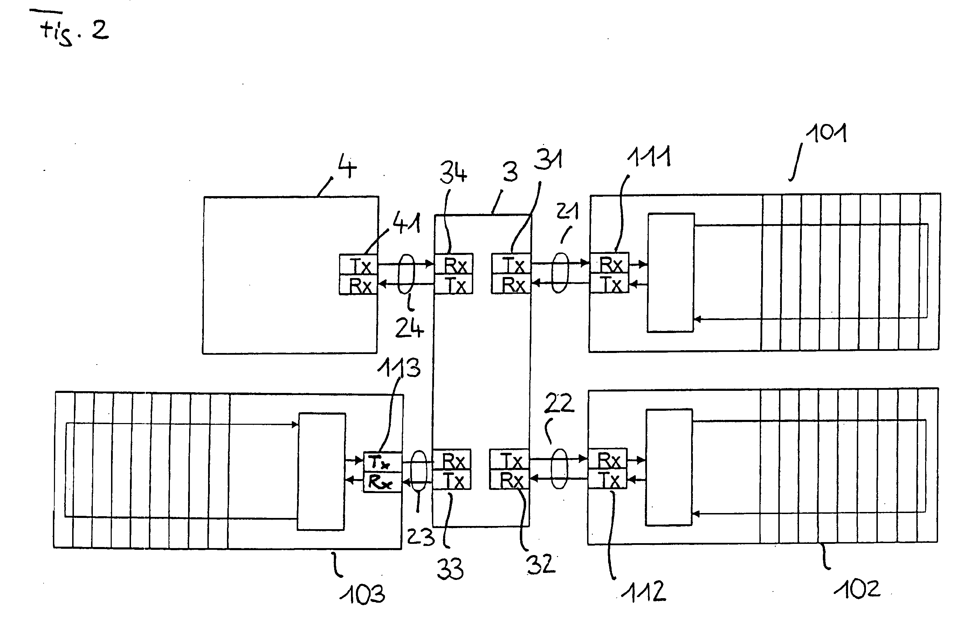

Figur 2 zeigt eine solche Ethernet-Netzwerkauslegung mit drei ringförmigen Übertragungssträngen 101, 102, 103, die jeweils entsprechend der in Figur 1A und 1B gezeigten Netzwerkauslegung aufgebaut sind, mit einem Ethernet-Koppler als Ethernet-Anschaltung und ringförmig an diesen angeschlossenen Teilnehmern. Der Ethernet-Koppler und die Teilnehmer sind dabei nur schematisch angedeutet, wobei vom Ethernet-Koppler jeweils die externe Schnittstelle 111, 112, 113 mit der Empfangseinheit Rx und der Sendeeinheit Tx gezeigt ist. Diese externen Schnittstellen 111, 112, 113 sind über separate Übertragungswege 21, 22, 23 des Übertragungsmediums 2 mit zugehörigen Strang-Schnittstellen 31, 32, 33 eines Switches 3 verbunden. Die Strang-Schnittstellen 31, 32, 33 des Switches 3 weisen jeweils eine Empfangeinheit Rx und eine Sendeeinheit Tx auf, wobei die jeweilige Sendeeinrichtung Tx der Strang-Schnittstelle des Switches 3 mit der Empfangseinheit Rx der externen Schnittstelle des ringförmigen Strangs verbunden ist. Die Empfangseinheit Rx der jeweiligen Strang-Schnittstelle des Switches 3 ist wiederum an die zugehörige Sendeeinheit Tx der externen Schnittstelle des zugeordneten ringförmigen Strangs angeschlossen.

Der Switch 3 weist außer den Strang-Schnittstellen 31, 32, 33 eine weitere Netzwerk-Schnittstelle 34 auf, die über einen separaten Übertragungsweg 24 des Übertragungsmediums 2 mit einem Steuerungsrechner 4, der die Echtzeitaufgaben verwaltet, verbunden ist. Der Steuerungsrechner 4 besitzt als Gegenstück dazu eine Netzwerk-Schnittstelle 41 mit einer Sendeeinheit Tx und einer Empfangseinheit Rx. Die Sendeeinheit Tx der Netzwerk-Schnittstelle 41 des Steuerungsrechners 4 ist dabei mit der Empfangseinheit Rx der Netzwerk-Schnittstelle 34 des Switches 3 verbunden. Die Empfangseinheit Rx der Netzwerk-Schnittstelle 41 des Steuerungsrechners 4 ist an die Empfangseinheit Tx der Netzwerk-Schnittstelle 34 des Switches 3 angeschlossen. Die in Figur 2 gezeigte Netzwerkauslegung ist dabei nur exemplarisch. Der Switch kann eine beliebige Anzahl von Strang-Schnittstellen und auch mehrere Netzwerk-Schnittstellen aufweisen. Auch ist es nicht zwingend erforderlich, dass alle Strang-Schnittstellen mit ringförmigen Strängen bzw. alle Netzwerk-Schnittstellen mit Steuerungsrechnern belegt sind. Die Übertragungsphysik auf den Übertragungswegen zwischen den Strang-Schnittstellen des Switches und den einzelnen Strängen und der Netzwerk-Schnittstelle des Switches und dem Steuerungsrechner kann sich dabei unterscheiden. Insbesondere kann der Übertragungsweg zwischen dem Steuerungsrechner und der Netzwerk-Schnittstelle des Switches für eine höhere Übertragungsgeschwindigkeit ausgelegt sein, als auf den Übertragungswegen zwischen den Strang-Schnittstellen des Switches und den nachgeordneten ringförmigen Strängen vorliegt.

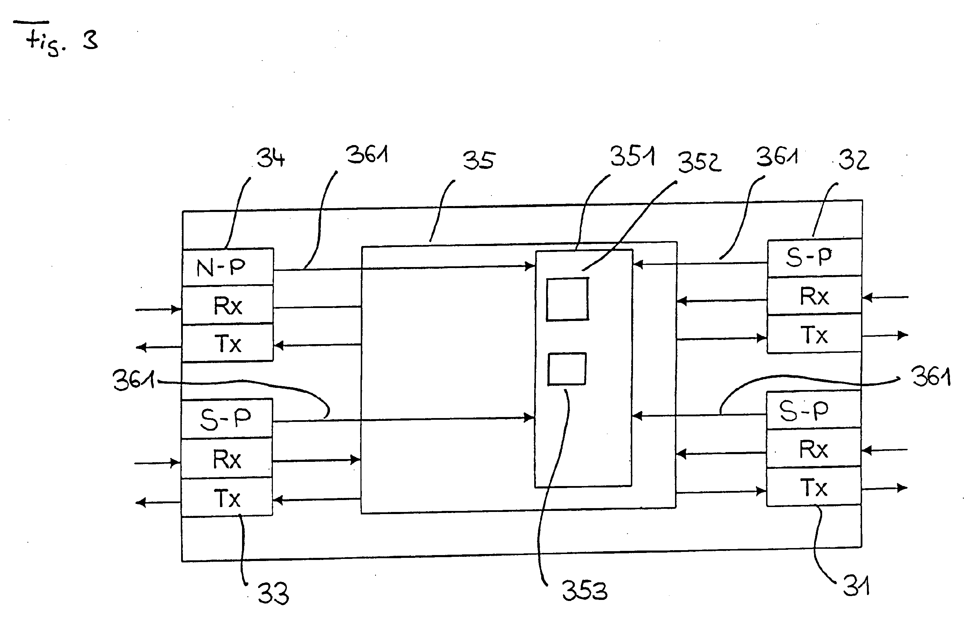

Figur 3 zeigt in schematischer Darstellung den Aufbau des Switches 3. Die Strang-Schnittstellen, 31, 32, 33 und die Netzwerk-Schnittstelle 34 sind über ein internes Leitungsnetz an eine Vermittlungseinheit 35 angeschlossen. Figur 3 zeigt dabei schematisch durch Pfeile die jeweilige Datenübertragungsrichtung zwischen den Schnittstellen 31, 32, 33, 34 und der Vermittlungseinrichtung 35. Die Vermittlungseinrichtung 35 weist eine Steuerungseinheit 351 auf, die den Datendurchsatz durch den Switch 3 steuert. Die Steuerungseinheit 351 enthält eine Schnittstellen-Zuordnungstabelle 352, in der festgelegt ist, dass über die Netzwerk-Schnittstelle 34 empfangene Ethernet-Telegramme über die Strang-Schnittstellen 31, 32, 33 an die angeschlossenen ringförmigen Stränge 101, 102, 103 ausgegeben werden und dass über die Strang-Schnittstellen 31, 32, 33 empfangene Ethernet-Telegramme über die Netzwerk-Schnittstelle 34 auf den Steuerungsrechner 4 rückgekoppelt werden.

Diese Auslegung des Switches ermöglicht es, dass die Ethernet-Telegramme ohne Verzögerung zwischen dem Steuerungsrechner und den einzelnen, über die ringförmigen Übertragungswege angeschlossenen Teilnehmer übertragen werden, wodurch eine Echtzeitbearbeitung von Steuerungsaufgaben gewährleistet wird. Durch die direkte Zuordnung der Schnittstellen kann ohne Adressenprüfung und damit Zeitverzögerung eine Durchleitung der Ethernet-Telegramme durch den Switch gewährleistet werden, um die Echtzeitfähigkeit des Switches zu garantieren. Die Steuerungseinheit 351 kann dabei weiter eine Prioritätstabelle 353 umfassen, die die Prioritätsreihenfolge bei der Weiterleitung der von den Strang-Schnittstellen 31, 32, 33 empfangenen Datenpakete festlegt. Die Prioritätstabelle 353 kann dabei so ausgelegt sein, dass, wenn mehrere Strang-Schnittstellen den gleichen Prioritätsrang aufweisen, anhand der Adresseninformation der über die einzelnen Strang-Schnittstellen empfangenen Ethernet-Telegramme entschieden wird, welches Telegramm priorisiert ist und zuerst an die Netzwerk-Schnittstelle 34 zur Ausgabe an den Steuerungsrechner 4 weitergeleitet wird. Alternativ kann jedoch ein fester Algorithmus vorgesehen sein, der bei gleichrangiger Priorität der Strang-Schnittstellen ohne Prüfung der Adresse festlegt, welche Telegramme zuerst über die Netzwerk-Schnittstelle auf den Steuerungsrechner zurückzukoppeln sind.

Bei der Durchleitung der Ethernet-Telegramme geht der Switch 3 so vor, dass die Steuerungseinheit 351 laufend den Füllgrad der Sende- bzw. Empfangspuffer in der Netzwerk-Schnittstelle 34 bzw. in den Strang-Schnittstellen 31, 32, 33 prüft. Diese Abfrage ist in Figur 3 durch den Datenpfeil 361 gekennzeichnet. Die Steuerungseinheit prüft dabei die einzelnen Schnittstellen in der Reihenfolge ihrer Priorität, wie sie in der Prioritätstabelle 353 festgelegt ist. Bevorzugt wird zuerst die Netzwerk-Schnittstelle 34 überprüft, anschließend dann die Strang-Schnittstellen 31, 32, 33. Ist ein Empfangspuffer voll, bewirkt die Steuerungseinheit, dass die Vermittlungseinrichtung 35 im Switch 3 die Telegramme aus dem Empfangspuffer der entsprechenden Schnittstelle zu dem Sendepuffer der in der Zuordnungstabelle zur Ausgabe festgelegten Schnittstelle weiterleitet. Die Zuordnung erfolgt dabei so, dass die im Empfangspuffer der Netzwerk-Schnittstelle 34 zwischengespeicherten Ethernet-Telegramme an die Sendepuffer der Strang-Schnittstellen 31, 32, 33 weitergeleitet werden. Die in den Empfangspuffern der Strang-Schnittstellen 31, 32, 33 empfangenen Ethernet-Telegramme werden dagegen an den Sendepuffer der Netzwerk-Schnittstelle 34 übermittelt.

Die Prüfung der Empfangspuffer der Strang-Schnittstellen in der durch die Prioritätstabelle 353 vorgesehenen Reihenfolge sorgt dafür, dass Ethernet-Telegramme von priorisierten Strängen zuerst über die Netzwerk-Schnittstelle 34 auf den Steuerungsrechner 4 zurückgesendet werden. Es besteht dabei die Möglichkeit Strang-Schnittstellen auch gleich zu priorisieren. Falls dann die gleichpriorisierten Strang-Schnittstellen volle Empfangspuffer aufweisen, kann anhand der Adresseninformation der in den Puffern zwischengespeicherten Ethernet-Telegramme festgelegt werden, welche Telegramme zuerst weiterzuleiten sind. Bevor die Steuereinheit 351 der Vermittlungseinrichtung 35 im Switch 3 die Weiterleitung der Ethernet-Telegramme vom Empfangpuffer der einen Schnittstelle zum zugeordneten Sendepuffer der anderen Schnittstelle vornimmt, prüft die Steuereinheit 351, ob im Sendepuffer ausreichend Speicherplatz für die Datenaufnahme gegeben ist. Falls dies nicht der Fall ist, sorgt die Steuereinheit 351 dafür, dass der Sendevorgang eingeleitet wird, um den Empfangspuffer zu leeren und um so dann die zu übergebenden Ethernet-Telegramme aufnehmen zu können.

Durch die erfindungsgemäße Switchauslegung ist es möglich, Ethernet-protokollunabhängig Ethernet-Telegramme ohne Verzögerung und Schnittstellenblockierung zwischen dem Steuerungsrechner und den in ringförmigen Strängen zusammengeschlossenen Teilnehmern auszutauschen, wodurch sich Echtzeitanwendungen mit extrem kurzen Zykluszeiten auch unter 10 µsec realisieren lassen. Die feste Zuordnung zwischen den Schnittstellen, bei der die über die Netzwerk-Schnittstelle empfangenen Ethernet-Telegramme ohne Verzögerung zu den Strang-Schnittstellen übertragen werden, und umgekehrt die über die Strang-Schnittstellen empfangenen Ethernet-Telegramme ohne Verzögerung zur Netzwerk-Schnittstelle weitergeleitet werden, sorgt für maximal verkürzte Durchleitungszeiten ohne unnötige Schnittstellenblockierung. Zugleich besteht die Möglichkeit die einzelnen Strang-Schnittstellen direkt zu priorisieren, um dort empfangene Ethernet-Telegramme mit maximal verkürzten Zykluszeiten an den Steuerungsrechner zurückleiten zu können.

In der Steuerungseinheit 351 der Vermittlungseinrichtung 35 des Switches 3 besteht weiterhin die Möglichkeit, einen zeitgesteuerten Sendevorgang der Schnittstellen durchzuführen. Dies ist insbesondere vorteilhaft, wenn eine synchronisierte Echtzeitverarbeitung durch die Teilnehmer durchgeführt werden soll. In diesem Fall sorgt die Steuereinheit 351 dafür, dass die Sendepuffer der Strang-Schnittstellen 31, 32, 33, an die das über die Netzwerk-Schnittstelle 34 empfangene Ethernet-Telegramm weitergeleitet worden ist, gleichzeitig die zwischengespeicherten Telegramme an die nachgeordneten ringförmigen Stränge zur Verarbeitung im Durchlauf ausgeben. Hierdurch wird für eine synchrone Verarbeitung des Ethernet-Telegramms in allen Strängen gesorgt. Die synchrone Datenausgabe kann zeitgesteuert über eine Systemuhr im Switch erfolgen.

Alternativ zu der in Figur 2 gezeigten Ausführungsform besteht auch die Möglichkeit, die Ethernet-Koppler der ringförmigen Stränge direkt in den Switch zu integrieren. Die Strang-Schnittstelle im Switch ist dann als Ethernet-Koppler ausgelegt, wobei die Strang-Schnittstelle dann auch die interne Schnittstelle des Netzwerkkopplers bildet, an die die Teilnehmer ringförmig angeschlossen sind. Weiterhin kann die Vermittlungseinrichtung des Switches auch eine Einrichtung zum Umsetzen von Datenpaketen von der Übertragungsphysik des Übertragungsweges zum Steuerungsrechner zur Übertragungsphysik zu den ringförmigen Strängen und umgekehrt aufweisen. Der Übertragungsweg zwischen der Netzwerk-Schnittstelle des Switches und dem Steuerungsrechner kann dabei eine wesentlich höhere Übertragungsgeschwindigkeit als der Übertragungsweg zwischen den Strang-Schnittstellen des Switches und den nachgeordneten ringförmigen Strängen besitzen, da die Strang-Schnittstellen parallel zueinander betrieben werden und somit kein Geschwindigkeitsverlust bei der Datenübertragung auftritt.

## Patentansprüche

1. Paketvermittlungsvorrichtung mit
einer Netzwerk-Schnittstelle (34) zum Senden und Empfangen von Datenpaketen über ein Kommunikationsnetzwerk,
mehreren Strang-Schnittstellen (31, 32, 33) zum Senden und Empfangen von Datenpaketen an mehrere in Reihe an einen ringförmigen Übertragungsweg angeschlossenen Teilnehmer, und einer mit der Netzwerk-Schnittstelle und den mehreren Strang-Schnittstellen verbundenen Vermittlungseinrichtung (35),
die ausgelegt ist, über die Netzwerk-Schnittstelle empfangene Datenpakete an die Strang-Schnittstellen und über die Strang-Schnittstellen empfangene Datenpakete an die Netzwerk-Schnittstelle weiterzuleiten,
**dadurch gekennzeichnet, dass**
die Vermittlungseinrichtung (35) eine Steuerungseinheit (351) aufweist, die den Datendurchsatz steuert, wobei die Steuerungseinheit (351) eine Schnittstellen-Zuordnungstabelle (352) umfasst, in der festgelegt ist, dass zwingend die über die Netzwerk-Schnittstelle (34) empfangenen Datenpakete über die Strang-Schnittstellen (31, 32, 33) und die über die Strang-Schnittstellen (31, 32, 33) empfangenen Datenpakete über die Netzwerk-Schnittstelle (34) ausgegeben werden, und wobei die Steuerungseinheit (351) ausgelegt ist, laufend die Netzwerk-Schnittstelle (34) und Strang-Schnittstellen (31, 32, 33) auf vollen Empfangspuffer hin zu überprüfen und bei Festellen eines vollen Empfangspuffers zu bewirken, dass die Datenpakete aus dem vollen Empfangspuffer der entsprechenden Schnittstelle zu einem Sendepuffer der in der Schnittstellen-Zuordnungstabelle (352) zur Ausgabe festgelegten Schnittstelle übermittelt werden, wobei die Datenpakete adressen- und protokollunabhängig automatisch weitergeleitet werden.

2. Paketvermittlungsvorrichtung nach Anspruch 1,
**dadurch gekennzeichnet, dass** die Steuerungseinheit (351) der Vermittlungseinrichtung (35) eine Prioritätstabelle (353) umfasst, die die Prioritätsreihenfolge bei der Weiterleitung der von den Strang-Schnittstellen (31, 32, 33) empfangenen Datenpakete über die Netzwerk-Schnittstelle (34) festlegt.

3. Paketvermittlungsvorrichtung nach Anspruch 2, **dadurch gekennzeichnet, dass** die Steuereinheit (351) der Vermittlungseinrichtung (35) bei mehreren Strang-Schnittstellen (31, 32, 33) mit gleichem Prioritätsrang anhand einer Adressinformation der empfangenen Datenpakete entscheidet, welches Datenpaket zuerst über die Netzwerk-Schnittstelle (34) weiterzuleiten ist.

4. Paketvermittlungsvorrichtung nach Anspruch 2, **dadurch gekennzeichnet, dass** die Steuereinheit (351) der Vermittlungseinrichtung (35) bei mehreren Strang-Schnittstellen (31, 32, 33) mit gleichem Prioritätsrang mithilfe eines festen Algorithmus entscheidet, welches Datenpaket zuerst über die Netzwerk-Schnittstelle (34) weiterzuleiten ist.

5. Paketvermittlungsvorrichtung nach einem der Ansprüche 1 bis 4, **dadurch gekennzeichnet, dass** die Steuereinheit (351) der Vermittlungseinrichtung (35) einen zeitgesteuerten Sendevorgang der über die Strang-Schnittstellen (31, 32, 33) zu versendenden Datenpakete durchführt.

6. Paketvermittlungsvorrichtung nach Anspruch 5, **dadurch gekennzeichnet, dass** die Steuereinheit (351) der Vermittlungseinrichtung (35) einen synchronen Sendevorgang der über die Strang-Schnittstellen (31, 32, 33) zu versendenden Datenpakete durchführt.

7. Paketvermittlungsvorrichtung nach einem der Ansprüche 1 bis 6, **dadurch gekennzeichnet, dass** die Vermittlungseinrichtung (35), die Netzwerk-Schnittstelle (34) und/oder die Strang-Schnittstellen (31, 32, 33) eine Einrichtung zum Umsetzen der Datenpakete zwischen der Übertragungsphysik des Kommunikationsnetzwerks und der Übertragungsphysik des ringförmigen Übertragungsweges aufweisen.

8. Kommunikationsnetzwerk mit einer Paketvermittlungsvorrichtung nach einem der Ansprüche 1 bis 7, **dadurch gekennzeichnet, dass** jede Strang-Schnittstelle (31, 32, 33) über einen Ethernet-Koppler (1) mit einer Mehrzahl von Teilnehmern (Gerät 1, ... Gerät n), die in Reihe über einen ringförmigen Übertragungsweg (5) an den Ethernet-Koppler angeschlossen sind, verbunden ist, wobei die Teilnehmer jeweils ausgelegt sind, die auf dem ringförmigen Übertragungsweg durchlaufenden Ethernet-Telegramme zu interpretieren und einen Datenaustausch vorzunehmen.

9. Kommunikationsnetzwerk nach Anspruch 8, **dadurch gekennzeichnet, dass** der Netzwerk-Koppler (1) eine externe Schnittstelle (11) zur Anbindung an die zugeordnete Strangschnittstelle der Paketvermittlungsvorrichtung (3) und eine interne Schnittstelle (12) zur Anbindung der Mehrzahl von Teilnehmern (Gerät 1, ... Gerät n) in Reihe an den ringförmigen Übertragungsweg (5) aufweist.

10. Kommunikationsnetzwerk nach Anspruch 9, **dadurch gekennzeichnet, dass** der Netzwerk-Koppler (1) zwischen der externen Schnittstelle (11) und der internen Schnittstelle (12) eine Einrichtung (13) zum Umsetzen der Ethernet-Telegramme zwischen der Übertragungsphysik des Netzwerks und der Übertragungsphysik des ringförmigen Übertragungswegs umfasst.

## Claims

1. A packet switching device comprising:
- a network interface (34) for sending and receiving data packets via a communication network,
- a plurality of string interfaces (31, 32, 33) for transmitting and receiving data packets to/from a plurality of subscribers connected in series to a ring-shaped transmission path, and
- a switching unit (35) connected to the network interface and to the plurality of string interfaces, configured to forward data packets received via the network interface to the string interfaces and to forward data packets received via the string interfaces to the network interface,
**characterized in that**
the switching unit (35) comprises a control unit (351) controlling the data throughput, the control unit (351) comprising an interface association table (352) which determines that in a mandatory manner the data packets received via the network interface (34) are outputted via the string interfaces (31, 32, 33) and the data packets received via the string interfaces (31, 32, 33) are outputted via the network interface (34), and wherein the control unit (351) is configured to continuously check the network interface (34) and the string interfaces (31, 32, 33) with regard to full receive buffer and, when detecting a full receive buffer, to secure that the data packets from the full receive buffer of the corresponding interface are transmitted to a transmit buffer of the interface determined for outputting in the interface association table (352), wherein the data packets are automatically forwarded in an address-independent and protocol-independent manner.

2. The packet switching device according to claim 1, **characterized in that** the control unit (351) of the switching unit (35) comprises a priority table (353) determining the order of priority when forwarding the data packets received by the string interfaces (31, 32, 33) via the network interface (34).

3. The packet switching device according to claim 2, **characterized in that** the control unit (351) of the switching unit (35) in the case of a plurality of string interfaces (31, 32, 33) with equivalent priority decides on the basis of an address information of the received data packets which data packet is to be forwarded via the network interface (34) first.

4. The packet switching device according to claim 2, **characterized in that** the control unit (351) of the switching unit (35) in the case of a plurality of string interfaces (31, 32, 33) with equivalent priority decides on the basis of a fixed algorithm which data packet is to be forwarded via the network interface (34) first.

5. The packet switching device according to any one of claims 1 to 4, **characterized in that** the control unit (351) of the switching unit (35) carries out a time-controlled transmission process of the data packets to be sent via the string interfaces (31, 32, 33).

6. The packet switching device according to claim 5, **characterized in that** the control unit (351) of the switching unit (35) carries out a synchronous transmission process of the data packets to be sent via the string interfaces (31, 32, 33).

7. The packet switching device according to any one of claims 1 to 6, **characterized in that** the switching unit (35), the network interface (34) and/or the string interfaces (31, 32, 33) comprise a unit for transferring the data packets between the transmission physics of the communications network and the transmission physics of the ring-shaped transmission path.

8. A communication network comprising a packet switching device according to any one of claims 1 to 7, **characterized in that** each string interface (31, 32, 33) is connected to a plurality of subscribers (device 1, ... device n) via an Ethernet coupler (1), the subscribers being connected in series to the Ethernet coupler via a ring-shaped transmission path (5), the subscribers each being configured to interpret the Ethernet telegrams passing through the ring-shaped transmission path and to carry out a data exchange.

9. The communication network according to claim 8, **characterized in that** the network coupler (1) comprises an external interface (11) for connecting to the associated string interface of the packet switching device (3) and an internal interface (12) for connecting the plurality of subscribers (device 1, ... device n) to the ring-shaped transmission path in series.

10. The communication network according to claim 9, **characterized in that** between the external interface (11) and the internal interface (12) the network coupler (1) comprises a unit (13) for transferring the Ethernet telegrams between the transmission physics of the network and the transmission physics of the ring-shaped transmission path.

## Revendications

1. Dispositif de commutation de paquets comportant une interface de réseau (34) pour émettre et recevoir des paquets de données par l'intermédiaire d'un réseau de communication,
une pluralité d'interfaces de lignes (31, 32, 33) pour l'émission et la réception de paquets de données au niveau d'une pluralité d'abonnés connectés en série à un chemin de transmission annulaire, et un dispositif de commutation (35) relié à l'interface de réseau et à la pluralité d'interfaces de lignes, qui est conçu pour réacheminer des paquets de données aux interfaces de lignes par l'intermédiaire de l'interface de réseau et pour réacheminer des paquets de données reçus par l'intermédiaire des interfaces de lignes à l'interface de réseau,
**caractérisé en ce que** le dispositif de commutation (35) comprend une unité de commande (351) qui commande le débit de données, l'unité de commande (351) comprenant une table de correspondance d'interfaces (352), dans laquelle est déterminé le fait que les paquets de données reçus par l'intermédiaire de l'interface de réseau (34) sont délivrés de force par l'intermédiaire des interfaces de lignes (31, 32, 33) et que les paquets de données reçus par l'intermédiaire des interfaces de lignes (31, 32, 33) sont délivrés de force par l'intermédiaire de l'interface de réseau (34), et l'unité de commande (351) étant conçue pour vérifier, lorsque l'interface de réseau (34) et les interfaces de lignes (31, 32, 33) fonctionnent, si un tampon de réception est plein et, lorsqu'il est établi que le tampon de réception est plein, pour faire en sorte que les paquets de données soient transmis du tampon de réception plein de l'interface correspondante à un tampon d'émission de la table de correspondance d'interfaces (352) afin de délivrer l'interface établie, les paquets de données étant automatiquement réacheminés indépendamment des adresses et du protocole.

2. Dispositif de commutation de paquets selon la revendication 1, **caractérisé en ce que** l'unité de commande (351) du dispositif de commutation (35) comprend une table de priorités (353) qui fixe l'ordre de priorité lors du réacheminement) par l'intermédiaire de l'interface de réseau (34) des paquets de données reçus par les interfaces de lignes (31, 32, 33).

3. Dispositif de commutation de paquets selon la revendication 2, **caractérisé en ce que** l'unité de commande (351) du dispositif de commutation (35) décide, sur la base d'une information d'adresse des paquets de données reçus, quel paquet de données doit être réacheminé en premier par l'intermédiaire de l'interface de réseau (34) lorsqu'une pluralité d'interfaces de lignes (31, 32, 33) ont le même rang de priorité.

4. Dispositif de commutation de paquets selon la revendication 2, **caractérisé en ce que** l'unité de commande (351) du dispositif de commutation (35) décide, au moyen d'un algorithme fixe, quel paquet de données doit être réacheminé en premier par l'intermédiaire de l'interface de réseau (34) lorsqu'une pluralité d'interfaces de lignes (31, 32, 33) ont le même rang de priorité.

5. Dispositif de commutation de paquets selon l'une quelconque des revendications 1 à 4, **caractérisé en ce que** l'unité de commande (351) du dispositif de commutation (35) effectue un processus d'émission commandé temporellement des paquets de données devant être émis par l'intermédiaire des interfaces de lignes (31, 32, 33).

6. Dispositif de commutation de paquets selon la revendication 5, **caractérisé en ce que** l'unité de commande (351) du dispositif de commutation (35) effectue un processus d'émission synchrone des paquets de données devant être émis par l'intermédiaire des interfaces de lignes (31, 32, 33).

7. Dispositif de commutation de paquets selon l'une quelconque des revendications 1 à 6, **caractérisé en ce que** le dispositif de commutation (35), l'interface de réseau (34) et/ou les interfaces de lignes (31, 32, 33) comprennent un dispositif destiné à convertir les paquets de données entre la couche physique de transmission du réseau de communication et la couche physique de transmission du chemin de transmission annulaire.

8. Réseau de communication comportant un dispositif de commutation de paquets selon l'une quelconque des revendications 1 à 7, **caractérisé en ce que** chaque interface de ligne (31, 32, 33) est reliée par l'intermédiaire d'un coupleur Ethernet (1) à une pluralité d'abonnés (appareil 1, ... appareil n) qui sont connectés en série au coupleur Ethernet par l'intermédiaire d'un chemin de transmission annulaire (5), les abonnés étant chacun aptes à interpréter les télégrammes Ethernet circulant sur le chemin de transmission annulaire et à effectuer un échange de données.

9. Réseau de communication selon la revendication 8, **caractérisé en ce que** le coupleur de réseau (1) comporte une interface externe (11) destinée à être raccordée à l'interface de ligne associée du dispositif de commutation de paquets (3) et une interface interne (12) destinée à être raccordée en série à la pluralité d'abonnés (appareil 1, ... appareil n) au chemin de transmission annulaire (5).

10. Réseau de communication selon la revendication 9, **caractérisé en ce que** le coupleur de réseau (1) comprend, entre l'interface externe (11) et l'interface interne (12), un dispositif (13) destiné à convertir les télégrammes Ethernet entre la couche physique de transmission du réseau et la couche physique de transmission du chemin de transmission annulaire.
